# EUROPEAN PATENT SPECIFICATION

(11) **EP 3 001 726 B1**
(45) Date of publication and mention of the grant of the patent: **25.03.2020**
(21) Application number: 13886940.9
(22) Date of filing: 13.06.2013
(51) Int. Cl.: H04W 36/14, H04W 36/00, H04W 60/04, H04W 8/06

(54) **SINGLE RADIO VOICE CALL CONTINUITY OPERATING METHOD AND DEVICE**
BETRIEBSVERFAHREN UND -VORRICHTUNG FÜR EINZELFUNKSPRACHANRUFKONTINUITÄT
PROCÉDÉ ET DISPOSITIF DE MISE EN OEUVRE DE LA CONTINUITÉ D'APPELS VOCAUX RADIO UNIQUES

(43) Date of publication of application: 30.03.2016
(73) Proprietor: Huawei Technologies Co., Ltd., Longgang District Shenzhen, Guangdong 518129 (CN)
(72) Inventor: WANG, Xinyong, Shenzhen, Guangdong 518129 (CN); SUN, Xiaoji, Shenzhen, Guangdong 518129 (CN); LIU, Haiyang, Shenzhen, Guangdong 518129 (CN)
(74) Representative: Körber, Martin Hans
(86) International application number: PCT/CN2013/077156
(87) International publication number: WO 2014/198033

(56) References cited:
- EP-A2- 2 364 562
- WO-A1-2012/045377
- CN-A- 101 594 647
- CN-A- 102 210 177
- CN-A- 102 238 676
- US-A1- 2010 323 695
- US-A1- 2010 331 011
- US-A1- 2013 040 658
- US-A1- 2013 065 589

## Description

### TECHNICAL FIELD

The present invention relates to wireless communications technologies, and in particular, to a single radio voice call continuity processing method and apparatus.

### BACKGROUND

When a UE (User Equipment, user equipment) performs a VOIP (Voice over Internet Protocol, Voice over Internet Protocol) service in a PS (packet switched) domain on an LTE (Long Term Evolution, Long Term Evolution) network, and due to a coverage reason, when the UE is handed over from the LTE network to a 2G network or a 3G network, for example, a GERAN (GSM Enhanced Data Rate for GSM Evolution Radio Access Network) network or a UTRAN (Universal Mobile Telecommunications System Terrestrial Radio Access Network, Universal Mobile Telecommunications System Terrestrial Radio Access Network) network, an SRVCC (Single Radio Voice Call Continuity, single radio voice call continuity) process needs to be performed to ensure voice continuity.

For example, WO 2012/045377A1 refers to a technique for connection attempt handling in a circuit switched fallback situation. Further, US 2013/0065589A1 refers to load distribution in CS fallback. Further, US 2010/0323695 A1 refers to a mobile management entity operating in a communication network and a selection method therefore. In addition, US 2010/0331011A1 refers to a circuit switched fallback for mobile terminated calls.

However, the single radio voice call continuity (Single Radio Voice Call Continuity, SRVCC) process in the prior art includes multiple times of LAU (Location Area Update, location area update) operations, where in most cases, LAU operations need to be performed in an HLR (Home Location Register, home location register), but such frequent LAU operations may reduce a system access success rate and also cause many signaling overheads for the HLR.

### SUMMARY

The present invention is defined by independent claims 1 to 3 and provides a single radio voice call continuity processing method and apparatus, to resolve a problem in the prior art that in SRVCC processing, frequent LAU operations reduce a system access success rate.

In a first aspect a single radio voice call continuity processing method performed by a mobility management entity, MME, or performed by a Serving General Packet Radio Service Support Node, SGSN, is provided, the method comprising the steps:
- when a single radio voice call continuity, SRVCC, handover request is received, acquiring, from a preset local configuration table, each location area identity corresponding to a Mobile Switching Center, MSC, currently associated with an SGs interface or a Gs interface, wherein the local configuration table comprises a correspondence between each location area identity and each MSC,
- determining whether a location area identity in target identification information in the SRVCC handover request a location area identity corresponding to the MSC currently associated with the SGs interface or the Gs interface,
- when a result of the determining step is yes, performing SRVCC processing by using the MSC, which is currently associated with the SGs interface or the Gs interface, as an SRVCC serving MSC,
- when the result of the determining step is no, selecting an MSC according to the target identification information to perform the SRVCC processing.

In a second aspect a single radio voice call continuity processing method performed by a mobility management entity, MME, or performed by a Serving General Packet Radio Service Support Node, SGSN, is provided, the method comprising the steps:
- when a single radio voice call continuity, SRVCC, handover request is received, acquiring from a preset Mobile Switching Center, MSC, domain name configuration table according to a location area identity in target cell identifier information in the SRVCC handover request, a MSC Pool name corresponding to the location area identity, wherein the MSC domain name configuration table comprises a correspondence between each location area identity and each MSC Pool name;
- determining whether the MSC Pool name corresponding to the location area identity is consistent with an MSC Pool name of the MSC currently associated with a SGs interface or a Gs interface,
- when a result of the determining step is yes, performing SRVCC processing by using the MSC, which is currently associated with the SGs interface or the Gs interface, as a SRVCC serving MSC,
- when the result of the determining step is no, selecting an MSC according to the target cell identifier information to perform the SRVCC processing.

In a third aspect a mobility management entity, MME, or a Serving General Packet Radio Service Support Node, SGSN, are provided being configured to perform any of the above methods.

It can be seen from the foregoing technical solutions that, according to the single radio voice call continuity processing method and apparatus provided by the present invention, an MSC, which is currently associated with an SGs interface or a Gs interface, is used to execute an SRVCC handover operation for a UE, which can reduce LAU operations, that is, reducing signaling interactions between an MSC and an HLR, and enable the UE to return to an original network rapidly after a voice service is ended, thereby improving a system access success rate.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of a single radio voice call continuity processing method according to an embodiment of the present invention;
FIG. 2 is a schematic flowchart of a single radio voice call continuity processing method according to another embodiment of the present invention;
FIG. 3 is a schematic flowchart of a single radio voice call continuity processing method according to still another embodiment of the present invention; and
FIG. 4 is a schematic structural diagram of a single radio voice call continuity processing apparatus according to yet another embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

### Embodiment 1

This embodiment provides a single radio voice call continuity processing method, and the method is applicable to a 3G network and a 4G network. The single radio voice call continuity processing method in this embodiment is performed by a single radio voice call continuity processing apparatus. The single radio voice call continuity processing apparatus may be disposed on an MME (Mobility Management Entity, mobility management entity) or an SGSN (Serving General Packet Radio Service Support Node, serving general packet radio service support node). Both the MME and the SGSN are used to implement a function of managing a UE context and a UE plane bearer.

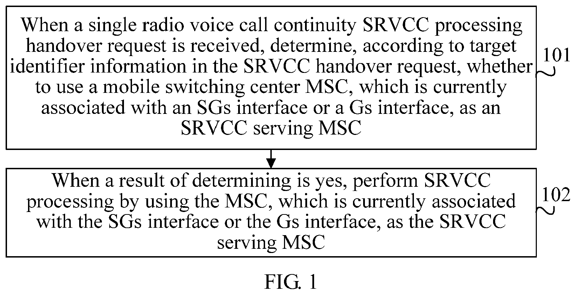

As shown in FIG. 1, FIG. 1 is a schematic flowchart of the single radio voice call continuity processing method according to this embodiment.

Step 101: When a single radio voice call continuity SRVCC processing handover request is received, determine, according to target identification information in the SRVCC handover request, whether to use a mobile switching center MSC, which is currently associated with an SGs interface or a Gs interface, as an SRVCC serving MSC.

The SRVCC handover request received by a single radio voice call continuity processing apparatus may carry target identifier (Target ID) information and SRVCC handover indication information. When a UE needs to be handed over from an original network to a target network, SRVCC processing needs to be performed to maintain voice continuity.

If the UE has initiated a combined attachment operation in advance, the single radio voice call continuity processing apparatus may first determine whether the mobile switching center MSC, which is currently associated with the SGs interface or the Gs interface, can be used as the SRVCC serving MSC.

After the UE initiates combined attachment, an MME/SGSN matches, in a preset configuration table, location area identity (Location Area Identity, LAI) information according to a TAI (Tracking Area Identity, tracking area identity) that is at the moment when the UE is accessed, and then matches a location area identity to a corresponding MSC. The preset configuration table includes a correspondence among a TAI, an LAI, and an MSC. The MME sends a location update request to the MSC subsequently, and the MSC registers the UE in an HLR. When the UE performs the combined attachment, a specific signaling interface is established between the MME and a corresponding MSC that is at the moment of the combined attachment, for example, the SGs interface; or a specific signaling interface is established between the SGSN and a corresponding MSC that is at the moment of the combined attachment, for example, the Gs interface. Therefore, the MSC, which is currently associated with the SGs interface or the Gs interface, is the MSC that is at the moment of the combined attachment performed by the UE; the SGs interface or the Gs interface is the signaling interface between the MME on which the single radio voice call continuity processing apparatus is located and the corresponding MSC that is at the moment of the combined attachment.

When the UE prepares to perform an SRVCC handover operation, the single radio voice call continuity processing apparatus determines whether the MSC, which is currently associated with the SGs interface or the Gs interface, can be used as an MSC of subsequent SRVCC operation, that is, whether the MSC can be selected to complete subsequent session switching, whether the MSC can still be used after the UE completes a voice service in the target network, and whether the MSC can also still be used when the UE returns to the original network. In this way, a process of sending the location update request to the MSC and executing LAU operations may be simplified, and signaling interactions between the MSC and the HLR is also reduced.

Step 102: When a result of determining is yes, perform SRVCC processing by using the MSC, which is currently associated with the SGs interface or the Gs interface, as the SRVCC serving MSC.

After the single radio voice call continuity processing apparatus selects the MSC, the MME or the SGSN may use the MSC to execute subsequent operations, for example, using the MSC to complete a session switching operation, and using the MSC to complete the combined attachment operation, so as to complete the switching operation of a terminal.

It should be noted that when a result of determining in step 101 is no, the single radio voice call continuity processing apparatus may select the SRVCC serving MSC according to the target identification information, and use the MSC to perform SRVCC processing.

According to the single radio voice call continuity processing method in this embodiment, an MSC, which is currently associated with an SGs interface or a Gs interface, is used to execute an SRVCC handover operation for a UE, which can reduce LAU operations, that is, reducing signaling interactions between an MSC and an HLR, and enable the UE to return to an original network rapidly after a voice service is ended, thereby improving a system access success rate.

### Embodiment 2

Based on Embodiment 1, this embodiment provides a single radio voice call continuity processing method, and this embodiment is an SRVCC handover method in an MSC Pool (mobile switching center pool) networking scenario. A specific signaling interface needs to be established between an MME and an MSC, and specifically, the specific signaling interface may be established when a UE performs a combined attachment operation. The specific signaling interface in this embodiment may be an SGs interface, where the SGs interface is used to support a CSFB (Circuit Switched Fallback, circuit switched fallback) service.

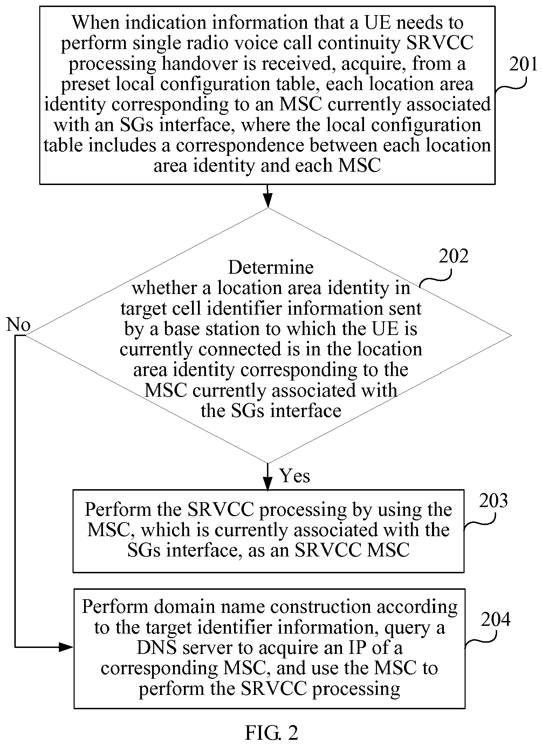

As shown in FIG. 2, FIG. 2 is a schematic flowchart of the single radio voice call continuity processing method according to this embodiment.

Step 201: When indication information that a UE needs to perform single radio voice call continuity SRVCC processing handover is received, acquire, from a preset local configuration table, each location area identity corresponding to an MSC currently associated with an SGs interface, where the local configuration table includes a correspondence between each location area identity and each MSC.

Specifically, the local configuration table may include a correspondence among a tracking area identity, a location area identity, and an MSC. In this way, a single radio voice call continuity processing apparatus may search, according to the MSC currently associated with the SGs interface, the local configuration table for a location area identity corresponding to the MSC. Generally, one MSC is corresponding to multiple location area identities. The switching indication information may be sent by a base station to the single radio voice call continuity processing apparatus.

Step 202: Determine whether a location area identity in target cell identifier information sent by a base station to which the UE is currently connected is in the location area identity corresponding to the MSC currently associated with the SGs interface, and when a result of determining is yes, perform step 203; otherwise, perform step 204.

The base station in this embodiment may be specifically an eNB (evolutional Node B, evolved NodeB). The base station is generally used on an LTE network. The LTE network may be also called an E-UTRAN (Evolved Universal Terrestrial Radio Access Network, Evolved Universal Terrestrial Radio Access Network). Related information of the MSC currently associated with the SGs interface may be preset on an MME, as long as the related information can be acquired by the single radio voice call continuity processing apparatus.

In addition, an Sv interface is further established between the MSC and the MME, and the Sv interface is used to support SRVCC handover processing. It should be noted that, in this embodiment, an MSC IP (Internet Protocol, Internet Protocol) of the Sv interface and an MSC IP of the SGs interface may have same physical device information; or an Sv interface and an SGs interface that are of a same physical device may be enabled to present a same IP address externally.

It should be noted that when a signaling interface in this embodiment is a Gs interface that needs to be established between an SGSN and the MSC, the step may be specifically: determining whether a location area identity in target cell identifier information sent by an RNC (Radio Network Controller, radio network controller) to which the UE currently belongs is in the location area identity corresponding to the MSC currently associated with the Gs interface.

Step 203: Perform the SRVCC processing by using the MSC, which is currently associated with the SGs interface, as an SRVCC serving MSC.

The single radio voice call continuity processing apparatus determines whether the location area identity in the target cell identifier information sent by the base station to which the UE is currently connected or sent by the RNC to which the UE currently belongs is in a location area identity range corresponding to the MSC currently associated with the SGs interface, and if a result of determining is yes, selects the MSC corresponding to the location area identity in the target cell identifier information as an MSC to perform SRVCC, where the MSC performs subsequent SRVCC processing.

It should be noted that when the signaling interface in this embodiment is the Gs interface that needs to be established between the SGSN and the MSC, the step may be specifically: using the MSC currently associated with the Gs interface as the SRVCC serving MSC, and using the MSC to perform the SRVCC processing.

Step 204: Perform domain name construction according to target identification information, query a DNS server to acquire an IP of a corresponding MSC, and use the MSC to perform the SRVCC processing.

When it is determined that the location area identity in the target cell identifier information sent by the base station to which the UE is currently connected is not in the location area identity corresponding to the MSC currently associated with the SGs interface, the single radio voice call continuity processing apparatus selects the SRVCC serving MSC according to the prior art, performs the domain name construction according to the target identification information, queries the DNS server to acquire the IP of the corresponding MSC, and then sends a PS to CS (Circuit Switch, circuit switch) switching request to the MSC.

According to the single radio voice call continuity processing method in this embodiment, an MSC, which is currently associated with an SGs interface, is used to execute an SRVCC handover operation for a UE, which can reduce LAU operations, that is, reducing signaling interactions between an MSC and an HLR, and enable the UE to return to an original network rapidly after a voice service is ended, thereby improving a system access success rate.

### Embodiment 3

Based on Embodiment 1, this embodiment provides a single radio voice call continuity processing method, and this embodiment is an SRVCC handover method in an MSC Pool (mobile switching center pool) networking scenario. A single radio voice call continuity processing apparatus in this embodiment is disposed on an SGSN. A specific signaling interface needs to be established between the SGSN and an MSC, and specifically, the specific signaling interface may be established when a UE performs a combined attachment operation. The specific signaling interface in this embodiment may be a Gs interface.

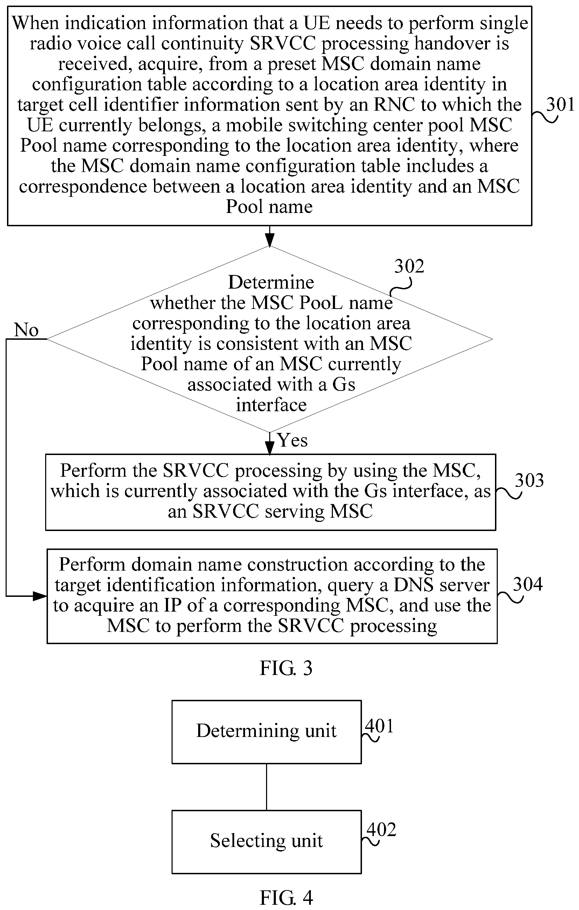

As shown in FIG. 3, FIG. 3 is a schematic flowchart of the single radio voice call continuity processing method according to this embodiment.

Step 301: When indication information that a UE needs to perform single radio voice call continuity SRVCC processing handover is received, acquire, from a preset MSC domain name configuration table according to a location area identity in target cell identifier information sent by an RNC to which the UE currently belongs, a mobile switching center pool MSC Pool name corresponding to the location area identity, where the MSC domain name configuration table includes a correspondence between each location area identity and each MSC Pool name.

A single radio voice call continuity processing apparatus may search, according to the location area identity in the target cell identifier information, the domain name configuration table for a corresponding MSC Pool name. One MSC Pool may include multiple MSCs.

Step 302: Determine whether the MSC Pool name corresponding to the location area identity is consistent with an MSC Pool name of an MSC currently associated with a Gs interface, and when a result of determining is yes, perform step 303; otherwise, perform step 304.

MSC Pool information of the MSC currently associated with the Gs interface may be preset on an SGSN, and the single radio voice call continuity processing apparatus may acquire the MSC Pool name from a corresponding storage location.

It should be noted that when a signaling interface in this embodiment is an SGs interface that needs to be established between an MME and the MSC, the step may be specifically: determining whether the MSC Pool name corresponding to the location area identity is consistent with the MSC Pool name of the MSC currently associated with the SGs interface.

Step 303: Perform the SRVCC processing by using the MSC, which is currently associated with the Gs interface, as an SRVCC serving MSC.

The single radio voice call continuity processing apparatus determines whether the location area identity in the target cell identifier information sent by a base station to which the UE is currently connected or sent by the RNC to which the UE currently belongs is in a location area identity range corresponding to the MSC currently associated with the Gs interface, and if a result of determining is yes, selects the MSC corresponding to the location area identity in the target cell identifier information as an MSC to perform SRVCC, where the MSC performs subsequent SRVCC processing.

It should be noted that when the signaling interface in this embodiment is the SGs interface that needs to be established between the MME and the MSC, the step may be specifically: using the MSC currently associated with the SGs interface as the SRVCC serving MSC, and using the MSC to perform the SRVCC processing.

Step 304: Perform domain name construction according to target identification information, query a DNS server to acquire an IP of a corresponding MSC, and use the MSC to perform the SRVCC processing.

When it is determined that the location area identity in the target cell identifier information sent by the base station to which the UE is currently connected is not in the location area identity corresponding to the MSC currently associated with the Gs interface, the single radio voice call continuity processing apparatus selects the SRVCC serving MSC according to the prior art, that is, performing the domain name construction according to the target identification information, querying the DNS server to acquire the IP of the corresponding MSC, and then sending a PS to CS switching request to the MSC.

According to the single radio voice call continuity processing method in this embodiment, an MSC, which is associated with a Gs interface, is used to execute an SRVCC handover operation for a UE, which can reduce LAU operations, that is, reducing signaling interactions between an MSC and an HLR, and enable the UE to return to an original network rapidly after a voice service is ended, thereby improving a system access success rate.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

### Embodiment 4

This embodiment provides a single radio voice call continuity processing apparatus, configured to perform the single radio voice call continuity processing method in Embodiment 1.

As shown in FIG. 4, FIG. 4 is a schematic structural diagram of the single radio voice call continuity processing apparatus according to this embodiment. The single radio voice call continuity processing apparatus includes a determining unit 401 and a selecting unit 402.

The determining unit 401 is configured to: when a single radio voice call continuity SRVCC processing handover request is received, determine, according to target identification information in the SRVCC handover request, whether to use a mobile switching center MSC, which is currently associated with an SGs interface or a Gs interface, as an SRVCC serving MSC; and the selecting unit 402 is configured to perform, when a result of determining of the determining unit 401 is yes, SRVCC processing by using the MSC, which is currently associated with the SGs interface or the Gs interface, as the SRVCC serving MSC.

A specific operation method of the single radio voice call continuity processing apparatus is consistent with that in Embodiment 1, and details are not described herein again.

Optionally, the selecting unit 402 in the single radio voice call continuity processing apparatus in this embodiment is further configured to: when it is determined, according to the target identification information in the SRVCC handover request, not to use the mobile switching center MSC, which is currently associated with the SGs interface or the Gs interface, as the SRVCC serving MSC, select the SRVCC serving MSC according to the target identification information to perform the SRVCC processing.

According to the single radio voice call continuity processing apparatus in this embodiment, an MSC, which is currently associated with an SGs interface or a Gs interface, is used to execute an SRVCC handover operation for a UE, which can reduce LAU operations, that is, reducing signaling interactions between an MSC and an HLR, and enable the UE to return to an original network rapidly after a voice service is ended, thereby improving a system access success rate.

### Embodiment 5

This embodiment mainly describes in detail an operation method of the determining unit in Embodiment 4.

The determining unit 401 in this embodiment may be specifically configured to:
acquire, from a preset local configuration table, each location area identity corresponding to the MSC currently associated with the SGs interface or the Gs interface, where the local configuration table includes a correspondence between each location area identity and each MSC; and
determine whether a location area identity in the target identification information in the SRVCC handover request is in the location area identity corresponding to the MSC currently associated with the SGs interface or the Gs interface.

Alternatively, the determining unit 401 may be specifically configured to:
acquire, from a preset MSC domain name configuration table according to a location area identity in the target cell identifier information in the SRVCC handover request, a mobile switching center pool MSC Pool name corresponding to the location area identity, where the MSC domain name configuration table includes a correspondence between each location area identity and each MSC Pool name; and
determine whether the MSC Pool name corresponding to the location area identity is consistent with an MSC Pool name of the MSC currently associated with the SGs interface or the Gs interface.

A specific operation method of the single radio voice call continuity processing apparatus in this embodiment is consistent with that in Embodiment 2 or Embodiment 3, and details are not described herein again.

According to the single radio voice call continuity processing apparatus in this embodiment, an MSC, which is currently associated with an SGs interface or a Gs interface, is used to execute an SRVCC handover operation for a UE, which can reduce LAU operations, that is, reducing signaling interactions between an MSC and an HLR, and enable the UE to return to an original network rapidly after a voice service is ended, thereby improving a system access success rate.

### Embodiment 6

This embodiment provides another single radio voice call continuity processing apparatus, configured to perform the single radio voice call continuity processing method in the foregoing embodiment.

The single radio voice call continuity processing apparatus in this embodiment includes: at least one processor and a memory, where the memory is configured to store executable program code, and the processor runs a program corresponding to the executable program code by reading the executable program code stored in the memory, to be configured to:
when a single radio voice call continuity SRVCC processing handover request is received, determine, according to target identification information in the SRVCC handover request, whether to use a mobile switching center MSC, which is currently associated with an SGs interface or a Gs interface, as an SRVCC serving MSC; and
when a result of determining is yes, perform SRVCC processing by using the MSC, which is currently associated with the SGs interface or the Gs interface, as the SRVCC serving MSC.

Optionally, that when the processor runs the program corresponding to the executable program code by reading the executable program code stored in the memory, to be configured to determine, according to the target identification information in the SRVCC handover request, whether to use the mobile switching center MSC, which is currently associated with the SGs interface or the Gs interface, as the SRVCC serving MSC, may be specifically:
acquiring, from a preset local configuration table, each location area identity corresponding to the MSC currently associated with the SGs interface or the Gs interface, where the local configuration table includes a correspondence between each location area identity and each MSC; and
determining whether a location area identity in the target identification information in the SRVCC handover request is in the location area identity corresponding to the MSC currently associated with the SGs interface or the Gs interface.

Alternatively, optionally, that when the processor runs the program corresponding to the executable program code by reading the executable program code stored in the memory, to be configured to determine, according to the target identification information in the SRVCC handover request, whether to use the mobile switching center MSC, which is currently associated with the SGs interface or the Gs interface, as the SRVCC serving MSC, may be specifically:
acquiring, from a preset MSC domain name configuration table according to a location area identity in the target cell identifier information in the SRVCC handover request, a mobile switching center pool MSC Pool name corresponding to the location area identity, where the MSC domain name configuration table includes a correspondence between each location area identity and each MSC Pool name; and
determining whether the MSC Pool name corresponding to the location area identity is consistent with an MSC Pool name of the MSC currently associated with the SGs interface or the Gs interface.

Optionally, the processor further runs the program corresponding to the executable program code by reading the executable program code stored in the memory, to be configured to:
when it is determined, according to the target identification information in the SRVCC handover request, not to use the mobile switching center MSC, which is currently associated with the SGs interface or the Gs interface, as the SRVCC serving MSC, select the SRVCC serving MSC according to the target identification information to perform the SRVCC processing.

According to the single radio voice call continuity processing apparatus in this embodiment, an MSC, which is currently associated with an SGs interface or a Gs interface, is used to execute an SRVCC handover operation for a UE, which can reduce LAU operations, that is, reducing signaling interactions between an MSC and an HLR, and enable the UE to return to an original network rapidly after a voice service is ended, thereby improving a system access success rate.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention, which is defined by the appended claims.

## Claims

1. A single radio voice call continuity processing method performed by a mobility management entity, MME, or performed by a Serving General Packet Radio Service Support Node, SGSN, the method comprising the steps:
• when a single radio voice call continuity, SRVCC, handover request is received, acquiring, from a preset local configuration table, each location area identity corresponding to a Mobile Switching Center, MSC, currently associated with an SGs interface or a Gs interface, wherein the local configuration table comprises a correspondence between each location area identity and each MSC,
• determining whether a location area identity in target identification information in the SRVCC handover request is a location area identity corresponding to the MSC currently associated with the SGs interface or the Gs interface,
• when a result of the determining step is yes, performing (102) SRVCC processing by using the MSC, which is currently associated with the SGs interface or the Gs interface, as a SRVCC serving MSC,
• when the result of the determining step is no, selecting an MSC according to the target identification information to perform the SRVCC processing.

2. A single radio voice call continuity processing method performed by a mobility management entity, MME, or performed by a Serving General Packet Radio Service Support Node, SGSN, the method comprising the steps:
• when a single radio voice call continuity, SRVCC, handover request is received, acquiring from a preset Mobile Switching Center, MSC, domain name configuration table according to a location area identity in target cell identifier information in the SRVCC handover request, a MSC Pool name corresponding to the location area identity, wherein the MSC domain name configuration table comprises a correspondence between each location area identity and each MSC Pool name;
• determining whether the MSC Pool name corresponding to the location area identity is consistent with an MSC Pool name of the MSC currently associated with a SGs interface or a Gs interface,
• when a result of the determining step is yes, performing (102) SRVCC processing by using the MSC, which is currently associated with the SGs interface or the Gs interface, as a SRVCC serving MSC,
• when the result of the determining step is no, selecting an MSC according to the target cell identifier information to perform the SRVCC processing.

3. A mobility management entity, MME, or a Serving General Packet Radio Service Support Node, SGSN, configured to perform any of the methods according to claims 1-2.

## Patentansprüche

1. Verarbeitungsverfahren für "Single Radio Voice Call Continuity", das von einer "Mobility Management Entity", MME, oder von einem "Serving General Packet Radio Service Support Node", SGSN, durchgeführt wird, wobei das Verfahren folgende Schritte aufweist:
• wenn eine "Single Radio Voice Call Continuity"(SRVCC)-Übergabeanforderung empfangen wird, Erfassen jeder Ortsbereichsidentität, die einer aktuell zu einer SGs-Schnittstelle oder einer Gs-Schnittstelle zugeordneten Mobilfunkvermittlungsstelle, MSC, entspricht, von einer voreingestellten lokalen Konfigurationstabelle,
wobei die lokale Konfigurationstabelle eine Entsprechung zwischen jeder Ortsbereichsidentität und jeder MSC aufweist,
• Bestimmen, ob eine Ortsbereichsidentität in der Zielidentifikationsinformation in der SRVCC-Übergabeanforderung eine Ortsbereichsidentität ist, die der aktuell zu der SGs-Schnittstelle oder der Gs-Schnittstelle zugeordneten MSC entspricht,
• wenn das Ergebnis des Schritts zum Bestimmen ja ist, Durchführen (102) der SRVCC-Verarbeitung unter Verwendung der MSC, die aktuell zu der SGs-Schnittstelle oder der Gs-Schnittstelle als eine "SRVCC Serving MSC" zugeordnet ist,
• wenn das Ergebnis des Schritts zum Bestimmen nein ist, Auswählen einer MSC gemäß der Zielidentifikationsinformation, um die SRVCC-Verarbeitung durchzuführen.

2. Verarbeitungsverfahren für "Single Radio Voice Call Continuity", das von einer "Mobility Management Entity", MME, oder von einem "Serving General Packet Radio Service Support Node", SGSN, durchgeführt wird, wobei das Verfahren folgende Schritte aufweist:
• wenn eine "Single Radio Voice Call Continuity"(SRVCC)-Übergabeanforderung empfangen wird, Erfassen der Domänennamen-Konfigurationstabelle von einer voreingestellten Mobilfunkvermittlungsstelle, MSC, gemäß einer Ortsbereichsidentität in der Zielzellenkennungssinformation in der SRVCC-Übergabeanforderung und eines MSC-Pool-Namens entsprechend der Ortsbereichsidentität, wobei die MSC-Domänennamen-Konfigurationstabelle eine Entsprechung zwischen jeder Ortsbereichsidentität und jedem MSC-Pool-Namen aufweist;
• Bestimmen, ob der MSC-Pool-Name, der der Ortsbereichsidentität entspricht, mit einem MSC-Pool-Namen der aktuell zu einer SGs-Schnittstelle oder einer Gs-Schnittstelle zugeordneten MSC übereinstimmt,
• wenn das Ergebnis des Schritts zum Bestimmen ja ist, Durchführen (102) der SRVCC-Verarbeitung unter Verwendung der MSC, die aktuell zu der SGs-Schnittstelle oder der Gs-Schnittstelle als eine "SRVCC Serving MSC" zugeordnet ist,
• wenn das Ergebnis des Schritts zum Bestimmen nein ist, Auswählen einer MSC gemäß der Zielzellenkennungsinformation, um die SRVCC-Verarbeitung durchzuführen.

3. "Mobility Management Entity", MME, oder "Serving General Packet Radio Service Support Node", SGSN, ausgebildet zum Durchführen eines der Verfahren nach den Ansprüchen 1 - 2.

## Revendications

1. Procédé de mise en œuvre de la continuité d'appels vocaux radio uniques, effectué par une entité de gestion de mobilité, MME, ou effectué par un nœud de support de services radio en paquets généraux de desserte, SGSN, le procédé comprenant les étapes consistant à :
• lorsqu'une demande de transfert de la continuité d'appels vocaux radio uniques, SRVCC, est reçue, acquérir, dans une table de configuration locale prédéfinie, chaque identité de zone d'emplacement correspondant à un centre de commutation mobile, MSC, associé actuellement à une interface SGs ou à une interface Gs,
la table de configuration locale comprenant une correspondance entre chaque identité de zone d'emplacement et chaque MSC,
• déterminer si une identité de zone d'emplacement contenue dans des informations d'identification de cible de la demande de transfert de SRVCC est une identité de zone d'emplacement correspondant au MSC actuellement associé à l'interface SGs ou à l'interface Gs,
• lorsqu'un résultat de l'étape de détermination est oui, effectuer (102) une mise en œuvre de la SRVCC au moyen du MSC, qui est actuellement associé à l'interface SGs ou à l'interface Gs, en tant que MSC de desserte de SRVCC,
• lorsqu'un résultat de l'étape de détermination est non, sélectionner un MSC en fonction des informations d'identification de cible pour effectuer la mise en œuvre de la SRVCC.

2. Procédé de mise en œuvre de la continuité d'appels vocaux radio uniques, effectué par une entité de gestion de mobilité, MME, ou effectué par un nœud de support de services radio en paquets généraux de desserte, SGSN, le procédé comprenant les étapes consistant à :
• lorsqu'une demande de transfert de la continuité d'appels vocaux radio uniques, SRVCC, est reçue, acquérir, depuis une table de configuration de nom de domaine de centre de commutation mobile, MSC, en fonction d'une identité de zone d'emplacement contenue dans des informations d'identifiant de cellule de cible de la demande de transfert de SRVCC, un nom de réserve de MSC correspondant à l'identité de zone d'emplacement, la table de configuration de nom de domaine de MSC comprenant une correspondance entre chaque identité de zone d'emplacement et chaque nom de réserve de MSC ;
• déterminer si un nom de réserve de MSC correspondant à l'identité de zone d'emplacement est en accord avec un nom de réserve de MSC du MSC actuellement associé à une interface SGs ou à une interface Gs,
• lorsqu'un résultat de l'étape de détermination est oui, effectuer (102) une mise en œuvre de la SRVCC au moyen du MSC, qui est actuellement associé à l'interface SGs ou à l'interface Gs, en tant que MSC de desserte de SRVCC,
• lorsqu'un résultat de l'étape de détermination est non, sélectionner un MSC en fonction des informations d'identifiant de cellule cible pour effectuer la mise en œuvre de la SRVCC.

3. Entité de gestion de mobilité, MME, ou nœud de support de services radio en paquets généraux de desserte, SGSN, configurée/configurés pour exécuter l'un quelconque des procédés selon les revendications 1 et 2.
